Europäisches Patentamt

European Patent Office

Office européen des brevets

(11) Veröffentlichungsnummer: **0 427 155 A1**

# (12) EUROPÄISCHE PATENTANMELDUNG

(21) Anmeldenummer: 90121076.5

(22) Anmeldetag: 03.11.90

(51) Int. Cl.⁵: **A01B 29/04**, A01B 29/06,
A01B 49/04

(30) Priorität: 07.11.89 DE 8913171 U

(43) Veröffentlichungstag der Anmeldung:
15.05.91 Patentblatt 91/20

(84) Benannte Vertragsstaaten:
DE DK FR GB IT NL

(71) Anmelder: Rabewerk GmbH + Co.

W-4515 Bad Essen(DE)

(72) Erfinder: Warnking, Richard, Dipl.-Ing.
Klockenpatt 5
W-4515 Bad Essen(DE)

(74) Vertreter: Missling, Arne, Dipl.-Ing.
Patentanwalt Bismarckstrasse 43
W-6300 Giessen(DE)

(54) Bodenbearbeitungsgerät.

(57) Bei einem Bodenbearbeitungsgerät bestehend mit einer Walze (1), welche am Umfang mehrere vorstehende, voneinander beabstandete Ringelemente aufweist, ist um bei einem einfachen Aufbau und einfacher, betriebssicherer Wirkungsweise die Vorbereitung von verdichteten Bodenstreifen zur Ein- bringung von Saatgut zu ermöglichen, ein sich in Bewegungsrichtung vor der Walze (1) und eine sich im wesentlichen über die gesamte Breite erstrecken- des, die Eindringtiefe der Walze (1) begrenzendes Planier- bzw. Stützelement (4;2) angeordnet ist.

Fig. 1

# BODENBEARBEITUNGSGERÄT

Die Erfindung bezieht sich auf ein Bodenbearbeitungsgerät, insbesondere auf ein Bodenbearbeitungsgerät mit einer Walze, welche am Umfang mehrere vorstehende, voneinander beabstandete Ringelemente aufweist.

Aus dem Stand der Technik ist bekannt, zur Saatbeetbereitung den Boden mittels eine üblicherweise zapfwellenbetriebenen Bodenbearbeitungsmaschine aufzubereiten, beispielsweise mittels einer Kreiselegge. Um diesen Boden nachfolgend zur Saat mit einer Sämaschine zu bearbeiten, ist es erforderlich, vor dem Sävorgang den Boden einzuebnen und/oder in bestimmtem Maße zu verdichten. Es hat sich dabei herausgestellt, daß die Bodenverdichtung streifenförmig erfolgen kann, um Bodenrinnen auszubilden, in welche das Saatgut eingelegt werden kann. Eine derartige Bestellmaschine zur Bodenbearbeitung ist aus der EP-B1-191 871 bekannt. Dabei weist die Bestellmaschine eine Walze aus, an deren im wesentlichen zylindrischen Umfang einzelne in Form von Ring wülsten ausgebildete Ringelemente vorhanden sind. Diese verdichten den Boden stärker, als die übrigen Bereiche der Walze, so daß in diese verdichteten Streifen oder Rinnen mittels Säscharen die Saat eingebracht werden kann. Als nachteilig erweist es sich bei diesem Gerät, daß der Anpreßdruck der Walze von den Jeweiligen Bodenbedingungen bzw. von der Beaufschlagung der Walze abhängt, so das sich bei unterschiedlichen Böden sehr unterschiedliche Verdichtungszustände ergeben können. Diese Nachteile werden insbesondere dadurch erwirkt, das die Walze nicht weiter abgestützt ist, sondern mit ihrem gesamten Gewicht auf dem Erdboden aufliegt.

Aus der DE-AS 10 52 141 ist eine Tiefgangsteuerung für eine Bodenfräse bekannt, bei welcher ein Schleifer oder Rufen verwendet werden, um eine Tiefeneinstellung eines Bodenbearbeitungsgerätes zu bewirken. Diese Anordnung sieht jedoch nicht die Abstützung einer Walze vor.

Die DE-OS 25 28 930 beschreibt eine landwirtschaftliche Maschine, bei welcher eine Bodendruckwalze vorgesehen ist, welche mit einzelnen Ringen ausgestattet ist, um ähnlich dem aus der EP-B1-191 871 bekannten Gerät verdichteten Bodenstreifen oder Furchen auszubilden, in welche das Saatgut eingebracht wird. Auch bei dieser Vorrichtung ruht die Walze direkt auf dem Erdboden, so daR die Tiefe der Furchen nicht exakt vorbestimmbar ist, ebensowenig wie das Maß der Bodenverdichtung.

Der Erfindung liegt die Aufgabe zugrunde, ein Bodenbearbeitungsgerät der eingangs genannten Art zu schaffen, welches beim einfachem Aufbau und einfacher, betriebssicherer Wirkungsweise die Vorbereitung von verdichteten Bodenstreifen zur Einbringung von Saatgut ermöglicht.

Erfindungsgemäß wird die Aufgabe dadurch gelöst, daß in Bewegungsrichtung vor der Walze 1 eine sich im wesentlichen über die gesamte Breite der Walze erstreckendes, die Walze zumindest zum Teil abstützendes Stützelement angeordnet ist.

Das erfindungsgemäße Bodenbearbeitungsgerät zeichnet sich durch eine Reihe erheblicher Vorteile aus. Da zum einen die streifenförmige Verdichtung des Bodens mittels einer Walze erfolgt, ist einer gleichmäßig und reproduzierbare Bodenbearbeitung sichergestellt. Die Verwendung einer Walze weist den weiteren Vorteil auf, daß diese einfach und kostengünstig herstellbar ist und ein hohes Maß an Verschleißwiderstand aufweist. Die Walze kann in einfacher Weise gelagert werden, wobei insbesondere eine sichere Höhenverstellung der Walze gewährleistet werden kann, um die Verdichtung des Bodens einstellbar zu machen. Da die Walze erfindungsgemäß mittels des Stützelements abgestützt ist, läßt sich das Maß der Bodenverdichtung durch die jeweiligen Ringelemente exakt einjustieren, so daß eine zu hohe oder zu geringe Verdichtung, welche sich störend auf den Saatvorgang auswirken würde, vermieden wird. Da weiterhin das Stützelement einen Teil des Gewichts der Walze auf den Boden weiterleitet, ist es möglich, mittels des Stützelementes, welches sich über die gesamte Breite der Walze erstreckt, zusätzlich eine Bodenbearbeitung durchzuführen, beispielsweise außer einer Verdichtung eine Planierung oder Einebnung.

Ein weiterer, wesentlicher Vorteil ist dadurch gegeben, daß das Bodenbearbeitungsgerät sehr einfach aufgebaut ist, da lediglich zusätzlich zur ohnehin vorhandenen Walze das Abstützelement vorgesehen sein muß.

In einer besonders günstigen Weiterbildung der Erfindung ist vorgesehen, daß die Walze gegenüber dem Stützelement höhenveränderbar ist, um eine Einstellung der Walze und damit eine Einstellung der Bodenverdichtung vornehmen zu können. Weiterhin ist in einer besonders günstigen Ausgestaltung der Erfindung vorgesehen, daß das Stützelement plattenförmig ausgestaltet ist und insbesondere zungenförmige Ansätze auf weist, welche sich zumindest teilweise zwischen die Ringelemente erstrecken. Die Ansätze dienen hierbei zusätzlich als Abstreifer bzw. Reinigungselemente, um zum einen das zwischen den Ringelementen der Walzen befindliche Erdreich zu entfernen und um zum anderen ein Eindringen dieses Erdreichs in die restlichen Bereiche der Zwischenräume auszuschalten. Die durch die Ansätze gebildeten Zungen können auch aus jeweils zwei Streifen bestehen, die sich unmittelbar neben den benachbarten Rädern bzw. Walzen-Ringelementen befinden. Diese Streifen dienen dann ausschließlich zur Reinigung der Ringelemente.

Damit bei einem Auftreffen der Walze auf Bodenhindernisse, beispielsweise Steine, eine Beschädigung der Walze ausgeschlossen ist, ist diese gegenüber dem Stützelement abgefedert gelagert.

Weiterhin kann es günstig sein, vor dem Stützelement eine Planierplatte anzuordnen, welche zur zusätzlichen Bodenaufbereitung dient und beispielsweise hochgeschleuderte Steine oder Erdbrocken, welche von der vorgeschalteten Bodenbearbeitungsmaschine abgegeben werden, abzufangen und dem Erdboden zuzuleiten. Die Planierplatte ist damit bevorzugterweise federnd an dem Stützelement gelagert, um bei Auftreffen auf Hindernisse eine Beschädigung zu vermeiden.

Erfindungsgemäß ist es von besonderer Wichtigkeit, eine entsprechende Höheneinstellung des Bodenbearbeitungsgerätes sicherzustellen. Es ist dabei insbesondere darauf zu achten, daß die Walze und das Stützelement in ihrer Lage relativ zu dem Erdboden gehalten werden können, wenn die Lage oder vertikale Einstellung des Vorgeräts verändert werden muß. Derartige Lageveränderungen des Vorgerätes sind dann möglich, wenn dessen Arbeitstiefe eingestellt werden soll und/oder wenn dieses auf Bodenhindernisse auftrifft und nach oben ausweicht. Eine günstige Lagerung des Stützelements erfolgt mittels eines Querbalkens, welcher gegenüber einem Vorgerät höhenverstellbar, beispielsweise über eine parallelogramm artige Anlenkung oder über Schwenkarme angebracht ist. Weiterhin kann auch die Walze an diesen Querbalken gelagert werden, während die Planierplatte entweder an dem Querbalken oder höhenbeweglich an dem Vorgerät angebracht ist. Alternativ dazu ist es auch günstig die Walze über Schwenkarme an Querbalken zu lagern. Dieser kann weiterhin mit einem Anschlußbock versehen sein, welcher über Lenker eines Dreipunktgestänges mit einem Vorgerät verbindbar ist.

Um zum einen beim Auftreffen auf Bodenhindernisse zu vermeiden, daß die Walze, das Stützelement oder die Planierplatte über die gesamte Breite des Bodenbearbeitungsgeräts angehoben werden müssen und um zum anderen die Manövrierbarkeit des Bodenbearbeitungsgeräts zu verbessern, kann es günstig sein, wenn die Walze, das Stützelement und/oder die Planierplatte in Form mehrerer Einzelsegmente ausgebildet sind, welche jeweils einzeln gelagert sind und sich nur über einen Teil der Breite des Bodenbearbeitungsgerätes erstrecken.

In einer besonders günstigen Ausbildung der Erfindung kann die Walze einzelne Räder oder Scheiben umfassen, wobei die zungenförmigen Ansätze des Stützelements, welche sich zwischen die einzelnen Räder oder Scheiben erstrecken, diese in Form eines Abstreifers umgreifen können. Es wird somit ein Teil der Räder oder Scheiben, bevorzugterweise der obere Teil, vollständig gegenüber dem Erdboden abgeschirmt, um die Walze sauber und verschmutzungsfrei zu halten.

Es ist an dieser Stelle darauf hinzuweisen, daß es erfindungsgemäß möglich ist, andere Reinigungsmittel vorzusehen, um die Walze von anhaftendem Erdreich zu befreien. So können beispielsweise Bürsten oder ähnliches vorgesehen sein. Weiterhin kann es auch vorteilhaft sein, zusätzlich Elemente zur Reinigung des Stützelements, der Planierplatte oder anderer Teile des Gerätes einzubauen.

Erfindungsgemäß ist es auch möglich, die Räder oder Scheiben in Fahrtrichtung zueinander versetzt anzuordnen, um zum einen die Montage bzw. Demontage der Räder zu erleichtern und um zum anderen die Lagerung der Räder günstiger ausgestalten zu können.

Die Räder der Walzen sind bevorzugterweise elastisch, verformbar ausgebildet, beispielsweise in Form von Schlappreifen oder Niederdruckreifen. Es ist jedoch auch möglich, die Räder mit einem Reifen zu versehen, welcher einen zentrischen mittigen Steg umfaßt, an dessen Außenbereich seitlich abstehende Lappen oder Ringwülste angeordnet sind.

Um ein Ausweichen der Räder beim Auftreffen auf Bodenhindernissen zu erleichtern und um die Montage und Demontage weiter zu vereinfachen, kann es besonders günstig sein, die Räder mittels separates Lagerarme zu lagern. Als Alternative dazu können die Räder oder Scheiben auch auf einen gemeinsamen Tragkörper aufgebracht und an diesem gelagert oder in kleinen Gruppen zusammengefaßt sein.

In einer besonders günstigen Ausgestaltung der Erfindung ist vorgesehen, daß das Bodenbearbeitungsgerät mit einer Sämaschine zusammengebaut ist, welche beispielsweise mittels eines Dreipunkt-Anbaubocks an dem Bodenbearbeitungsgerät ankoppelbar ist und hinter diesem angeordnet ist. Dabei kann beispielsweise ein Oberlenkeranschluß der Sämaschine über einen Zwischenlenker mit dem Anschlußbock verbunden sein, während untere Lenker eines Anschlußgestänges an den Außenseiten des Vorgeräts und des Querbalkens gelagert sind. Bevorzugterweise ist die Sämaschine mit Säscharen versehen, welche hinter dem Bodenbearbeitungsgerät bzw. dessen Walze münden, wobei die Säschare entweder in die durch das Bodenbearbeitungsgerät erzeugten Bodenrillen oder in die zwischen Rillen aufgeworfenen Dämme münden. Die Enden der Saatrohre können unmittelbar über der Sohle der Rille münden, so daß das Saatgut in die Bodenrille gestreut wird. Es ist auch möglich, daß Säschare in die Sohle der Bodenrillen eindringen. In Abhängigkeit von der Bodenbeschaffenheit und der Art des Saatgutes kann die eine oder die andere Ausbildungsform günstiger sein, etwa hinsichtlich des Wasserhaushalts des Bodens, beispielsweise um zu vermeiden, daß das Saatgut durch starken Regen abgeschwemmt wird oder in nicht erwünschter Weise durch sich in den Bodenrillen sammelndes Wasser beeinträchtigt wird.

Zustreicher, Druckrollen oder Striegel können an den Ansätzen des Stützelements angebracht sein. Die Ausläufer der Saatrohre können mit den Enden der Zungen des Stützelements verbunden sein. Dabei sind die Säschare zweckmäßigerweise noch abgefedert, wobei die Abfederung durch verstellbare Anschläge begrenzt werden kann, welche an den Zungen angebracht sind.

Um eine Einstellung der Sämaschine zu erleichtern, ist vorgesehen, daß diese gegenüber dem Bodenbearbeitungsgerät höhenverstellbar ist, wobei auch bei der Höhenverstellbarkeit ein Ausweichen des Bodenbearbeitungsgeräts bzw. der Walze oder des Stützelements beim Auftreffen auf Hindernisse ermöglicht wird.

Erfindungsgemäß kann das Vorgerät mittels einer zentralen Tiefenverstellung verstellbar sein, welche beispielsweise in Form eines diagonal angeordneten Hydraulikzylinders ausgestaltet sein kann, der zur Aushebung des Bodenbearbeitungsgeräts gegenüber dem Vorgerät eingesetzt werden kann.

Erfindungsgemäß ist es vorteilhaft, wenn das Bodenbearbeitungsgerät gegenüber dem Vorgerät mittels eines Hydraulikzylinders angehoben werden kann. Dieser Hydraulikzylinder sollte unabhängig von der zentralen Tiefeneinstellbarkeit des Gerätes ausgebildet sein, welche ebenfalls in Form eines Hydraulikzylinders ausgeführt sein kann. Alternativ dazu ist es jedoch auch möglich, mittels eines einzigen Zylinders sowohl die Tiefeneinstellung als auch die Anhebung zu realisieren.

In Weiterbildungen der Erfindung ist vorgesehen, daß zusätzlich eine Düngeeinrichtung anbaubar ist, durch welche in die Bodenrillen zusätzlich zu dem Saatgut Dünger eingebracht werden kann oder eine Düngeeinrichtung statt einer Säeinrichtung eingesetzt werden kann. Die Sämaschine und die Düngeeinrichtung können einander derartig zugeordnet sein, daß die Sämaschine das Saatgut in die Rillen einbringt, der Dünger aber in die dazwischen befindlichen Dämme eingelegt wird. Die Düngereinbringungselemente können somit im Bereich zwischen zwei Saatrillen vorgesehen sein.

Zusätzlich ist es möglich, an diesen Düngereinbringungselementen Saatrillenschließer anzuordnen, welche die benachbarten Saatrillen zustreichen oder zudrücken.

Um weiterhin eine ausreichende Belastung der Bodenwalze sicherzustellen, kann diese mit einer Gewichtsbelastung und/oder einer Rütteleinrichtung versehen sein.

Die erfindungsgemäße Aufgabe wird weiterhin gelöst durch ein Bodenbearbeitungsgerät, welches ein gegen den Boden anpreßbares Kufenelement aufweist, welches zur Ausbildung zueinander paralleler Bodenrillen mit Profilierungen versehen ist. Der von dem Vorgerät aufgearbeitete und vorbereitete Boden wird somit durch das Kufenelement eingeebnet und mit entsprechenden Bodenrillen versehen, in welche nachfolgend Saatgut eingebracht werden kann. Dabei ist es besonders günstig, wenn das Kufenelement im wesentlichen plattenförmig ausgebildet ist. Es kann weiterhin federnd höhenveränderbar an dem Vorgerät gelagert sein, um bei einem Auftreffen auf Hindernisse nach oben ausweichen zu können. Zur Einebnung des Bodens ist es weiterhin vorteilhaft, wenn der vordere Bereich des Kufenelements abgeschrägt ausgebildet ist. In einer besonders günstigen Weiterentwicklung der Erfindung ist vorgesehen, daß die Profilierungen höheneinstellbar ausgebildet sind, um somit die Tiefe der auszubildenden Bodenrillen und damit das Maß der Bodenverdichtung einstellen zu können.

Wenn die Sämaschine des erfindungsgemäßen Bodenbearbeitungsgeräts mit Saatgut gefüllt ist, kann es, in Abhängigkeit von der Bodenbeschaffenheit, insbesondere bei weniger tragfähigen leichteren Böden, dazu kommen, daß die Belastung auf die Walze und das Stützelement die erwünschten Grenzwerte überschreitet. Für weniger tragfähige Böden können somit bevorzugterweise zusätzliche Abstützeinrichtungen vorgesehen sein, welche in Form einer Walze ausgebildet sein können, die beispielsweise hinter den Saatrohren angeordnet ist. Es ist auch möglich, ein oder mehrere zusätzliche Stützräder, bevorzugterweise hinter den Saatrohren zu lagern.

Diese Walze kann dann diejenige Walze bilden, mit der ein zapfwellengetriebenes Bodenbearbeitungsgerät überlicherweise gekoppelt ist. Es ergibt sich dann die Möglichkeit, dieses Bodenbearbeitungsgerät, insbesondere wenn es einen Teil einer Säeinrichtung bildet, gegenüber der Bodenwalze abzufedern, so daß das Bodenbearbeitungsgerät immer mit einer gleichmäßigen Belastung auf dem Boden ruht, unabhängig davon, ob die Sämaschine gefüllt oder leer ist. Die Belastung der Walze ist dann unabhängig von den anderen Gewichten der einzelnen Aggregate. Dies stellt einen wesentlichen Vorteil dar, welchen das erfindungsgemäße Bodenbearbeitungsgerät aufweist. Bevorzugterweise ist die Abfederung einstellbar ausgebildet, damit die nach den vorliegenden Bodenverhältnissen der speziell auf die Saatrillen ausgeübte Druck ausgewählt werden kann. Die Sämaschine ist somit auf dem zapfwellengetriebenen Vorgerät aufgebaut, nicht jedoch auf der Säwalze. Weiterhin kann es besonders günstig sein, wenn die Sämaschine von der zusätzlichen Stützwalze abgestützt wird. Dadurch kann die Belastung der Säwalze unabhängig von dem Gewicht von der mehr oder weniger gefüllten Säbmaschine gehalten werden.

Erfindungsgemäß ist es möglich, das vordere Bodenbearbeitungsgerät so auszubilden, daß dieses den Acker nur in Streifen vor den einzelnen Walzenelementen bearbeitet. Die Bearbeitungswerkzeuge können beispielsweise Frässcheiben sein, die nur unwesentlich breiter den Boden bearbeiten, als die Breite der Saatrillen. Es ist somit möglich, das erfindungsgemäße Bodenbearbeitungsgerät an ein sogenanntes Direkt-Saat-Verfahren anzupassen, bei welchem der Ackerboden überwiegend unbearbeitet verbleibt und nur die Streifen, in welche die Säschare eingreifen, bearbeitet werden. Dabei verbleiben zwischen den Saatreihen Bewuchsreste, welche eine Mulchschicht bilden können. Eine derartige Direktsaat wird in der Hauptsache wegen des damit verbundenen Erosionsschutzes angewandt, sie senkt jedoch auch die Bodenbearbeitungskosten und vermeidet unnötige Störungen der Bodenstruktur und der Bodenbiologie.

Um eine Säuberung der einzelnen Walzenelemente sicherzustellen, ist es möglich, eine Gummibereifung zu verwenden. Es ist jedoch auch, in Abhängigkeit von den jeweiligen Anwendungsbedingungen günstig, die Walzenelemente aus nicht rostendem Stahl, beispielsweise Nirostastahl herzustellen.

Im Folgenden wird die Erfindung anhand von Ausführungsbeispielen in Verbindung mit den Zeichnungen beschrieben.

Dabei zeigt:

Fig. 1 eine schematische Seitenansicht des ersten Ausführungsbeispiels des erfindungsgemäßen Bodenbearbeitungsgeräts,

Fig. 2 eine Draufsicht auf die Anordnung gemäß Fig. 1, wobei, die Dosier- und Sämaschine zum Zwecke der deutlicheren Darstellung weggelassen wurde,

Fig. 3 und 4 Details verschiedener Ausführungsbeispiele der erfindungsgemäßen Walze,

Fig. 5 bis 9 schematische Seitenansichten, ähnlich Fig. 1, weitere Ausführungsbeispiele des erfindungsgemäßen Bodenbearbeitungsgerätes,

Fig. 10 eine schematische Seitenansicht einer weiteren Ausgestaltungsvariante des erfindungsgemäßen Bodenbearbeitungsgeräts,

Fig. 11 eine schematische Teil-Schnittansicht des in Fig. 10 gezeigten Kufenelements,

Fig. 12 eine Ausgestaltung eines erfindungsgemäßen Oberlenkers für das Kopplungsgestänge,

Fig. 13 eine Detailansicht eines weiteren Ausführungsbeispiels der erfindungsgemäßen Walze,

Fig. 14 bis 16 weitere schematische Seitenansichten von Ausführungsbeispielen des Bodenbearbeitungsgerätes, ähnlich Fig. 1,

Fig. 17 eine Detailansicht eines weiteren Ausführungsbeispiels des erfindungsgemäßen Stützelements und,

Fig. 18 eine weitere schematische Seitenansicht, ähnlich Fig. 1 eines weiteren Ausführungsbeispiels des Bodenbearbeitungsgeräts.

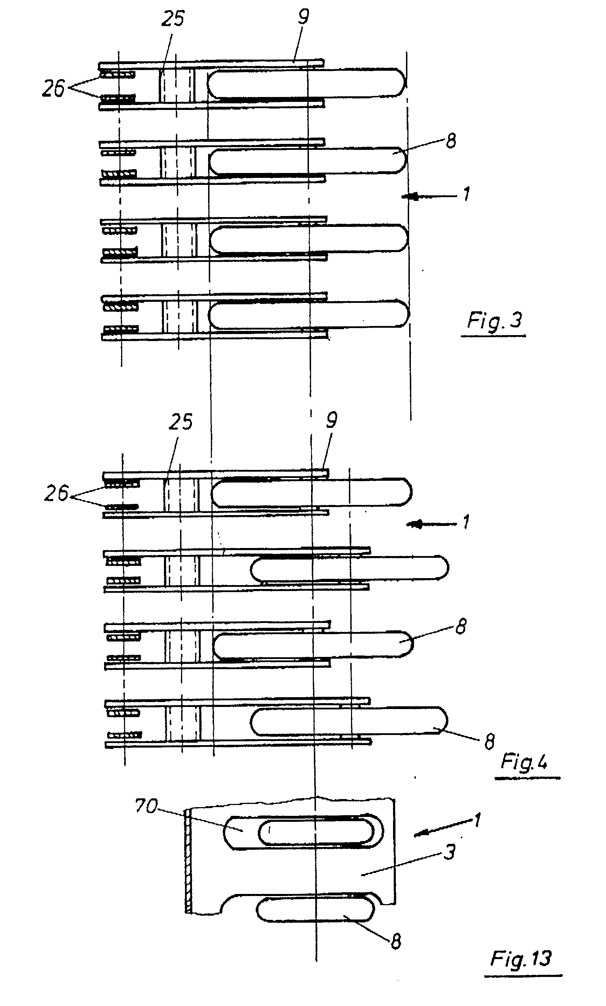

In Fig. 1 ist in schematischer Seitenansicht ein Ausführungsbeispiel des erfindungsgemäßen Bodenbearbeitungsgeräts dargestellt, welches mit einem mit Kreiselzinken 17, welche in üblicher Weise zapfwellenangetrieben sind, ausgerüsteten Vorgerät 6 verbunden ist. Das erfindungsgemäße Bodenbearbeitungsgerät umfaßt eine Walze 1, sowie ein vor der Walze angeordnetes Stützelement 2. Weiterhin ist eine Sämaschine 10 vorgesehen, welche mit Saatrohren 13 ausgerüstet ist, um Saatgut in den Boden einzubringen. Das Vorgerät 6 (Kreiselegge) stützt sich auf die Walze 1 ab, wobei die Kopplung über ein parallelogrammartiges Gelenkviereck erfolgt. Die Parallelogrammform ermöglicht es, daß die durch Walze 1, Stützelement 2 und Sämaschine 10 gebildete Gruppe bei einer Aufwärtsbewegung des Vorgeräts 6 keine Kippbewegung macht. Da das Dreipunktgestänge zwischen dem Schlepper und der Egge jedoch vielfach nicht in Form eines Parallelogramms ausgerichtet ist, muß das in Fig. 1 gezeigte Gestänge zwischen der Kreiselegge (Vorgerät 6) und der Walze 1 nicht unbedingt in Form eines Parallelogramms ausgebildet sein. Es ist deshalb ausreichend, wenn obere und untere Lenker 18, 19 so ausgerichtet sind, daß der von ihnen gebildete Pol annähernd mit dem aus dem Dreipunktgestänge gebildete Pol zusammenfällt.

Vor der Walze 1 (in Fahrtrichtung gesehen) ist das Stützelement 2 so angebracht, daß dieses mit ebenfalls abstützenden Ansätzen 3 versehen sein kann, welche zwischen die einzelnen Räder der Walze (siehe Fig.2 ) eingreifen können, um auch als Abstreifer oder ähnliches zu dienen. Das Stützelement 2 ist im wesentlichen in Form einer horizontalen Platte ausgebildet, weist an seiner Vorderseite 20 jedoch eine Abschrägung auf, um das auftreffenden Erdreich zu planieren.

Die Walze 1 und das Stützelement 2 weisen während der Arbeit des Bodenbearbeitungsgeräts normalerweise eine feste Position zueinander auf, um die Tiefe, mit welcher die Walze 1 in die Erdoberfläche drückt, genau einzustellen. Die Bodenrillen weisen somit jeweils eine gleichmäßig angedrückten Bodenzustand auf.

Der Oberlenker 18 und die Unterlenker 19 greifen bei dem gezeigten Ausführungsbeispiel an einer Koppel 21 eines Anschlußbocks 7 an. Weiterhin ist ein in Form eines Hohlprofils ausgebildeter Querbalken 5 vorgesehen, welcher sich über die gesamte Gerätebreite erstreckt. An den Enden des Querbalken 5 sind Endplatten 22 befestigt. Diese sind am Punkt 23 an den Lenkern 19 gelagert. Die Lenker 19 sind somit auch an den Seiten des Gehäuses des Vorgeräts 6 gela gert. Alternativ dazu können die Lenker 18 und 19 jedoch auch ähnlich einem Dreipunktgestänge im mittleren Bereich des Vorgeräts 6 vorgesehen sein. Diese Ausgestaltungsform ist in den nachfolgenden Ausführungsbeispielen erläutert.

An den Endplatten 22 sind weiterhin Arme 24 angeordnet, wobei die Arme 24 Tragarme der durchgehenden Walze 1 bilden.

Wie in Fig. 3 dargestellt, kann die Walze 1 auch in Form einer Walze ausgebildet sein, bei welcher einzelne Räder 8 jeweils an einem gabelartigen Lagerarm 9 gelagert sind, wobei die Lagerarme 9 über Rohrstücke 25 miteinander verbunden sind und über ein Laschenpaar 26, welches an der Unterseite des Querbalkens 5 befestigt ist, angebracht sind. Diese Ausführungsform ist in Fig. 3 dargestellt.

Um das Stützelement 2 fest mit dem Querbalken 5 bzw. der Koppel 21 zu verbinden, erstrecken sich die Endplatten 22 um einen gewissen Betrag nach unten. An der Unterseite der Endplatten 22 ist ein Winkelprofil 27 befestigt, weiterhin ist die Vorderseite 20 des Stützelements 2 so abgewinkelt, daß diese mit dem Winkelprofil 27 verbindbar ist. Zur weiteren Abstützung des Stützelements 2 dienen Stützen 28, welche ebenfalls an dem Winkelprofil 27 befestigt sind.

Erfindungsgemäß ist die Walze 1, welche die einzelnen Räder 8 umfaßt, so ausgebildet, daß diese nach oben ausweichen kann, wenn sie auf Widerstände, beispielsweise Steine auftrifft. Zu diesem Zwecke sind die Arme 24 auf Druckfedern 29 abgestützt, welche sich wiederum gegen Konsolen 30 abstützen. Weiterhin sind Schrauben 31 vorgesehen, welche mit großen Endscheiben 32 versehen sind und die Konsolen 30 durchgreifen. Es ist somit eine Einstellmöglichkeit geschaffen. Gegenüber der Abfederung sind Stellschrauben 33 angeordnet, mit welchen die Eindringtiefe der Räder 8 bzw. der Walze 1 einstellbar ist.

Zusätzlich zu der die Erde planierenden Vorderseite 20 des Stützelements 2 ist eine Planierplatte 4 vorgesehen, welche ebenfalls an den Endplatten 22 gelagert ist und mittels Zugfedern 34 elastisch gehalten ist.

Die erfindungsgemäße Geräteanordnung gestattet ein gleichmäßiges Andrücken der Erdoberfläche im Bereich der Saatreihe, so daß die nachfolgende Sämaschine 10 ein gezieltes Einbringen des Saatguts ermöglicht. Die Sämaschine 10 ist direkt mit der Koppel 21 bzw. dem Anschlußbock 7 verbunden, wobei Unterlenkerzapfen 35 in entsprechenden Gabeln eingreifen, welche am Querbalken 5 befestigt sind. Weiterhin ist ein Lenker 36 (Zwischenlenker) vorgesehen, welcher die Sämaschine 10 mit dem Anschlußbock 7 verbindet.

Erfindungsgemäß ist es somit möglich, die Saatrohre 13 hinter den Rädern 8 der Walze 1 anzuordnen, wobei beispielsweise Säschare 12 direkt in die angedrückten Erdstreifen eingreifen können. Die angedrückten Streifen weisen dabei eine Breite von etwa 4 bis 8 cm auf. Es ist jedoch auch möglich, das Saatgut direkt aus den Saatrohren 13 in die Bodenrillen einzustreuen. In Abhängigkeit von der Ausgestaltung der Sämaschine ist es möglich, einzelne Saatreihen oder eine Bandsaat bei entsprechend breiten Rillen vorzusehen.

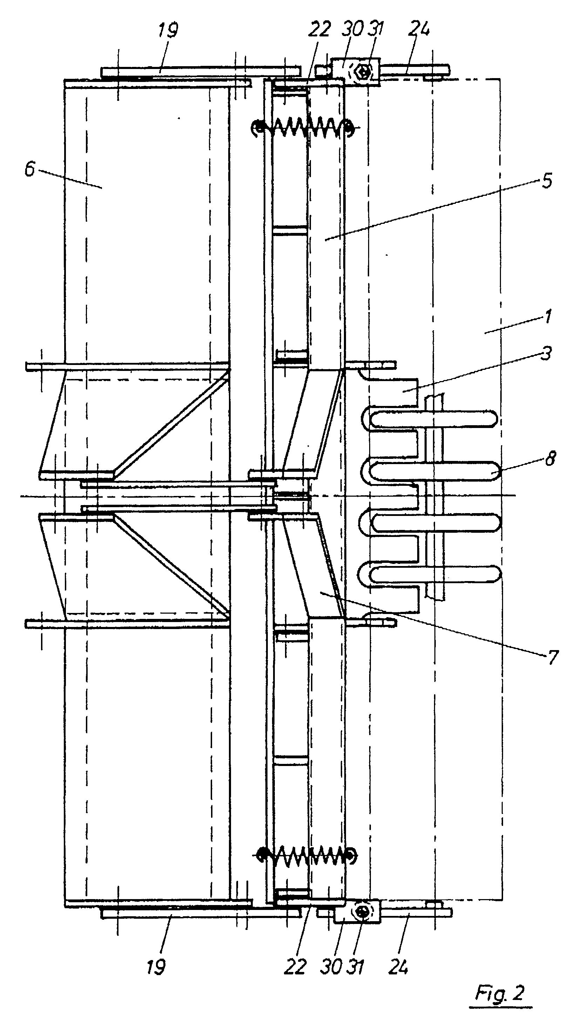

Bei dem in Fig. 1 gezeigten Ausführungsbeispiel können die Walze 1 bzw. die Räder 8 gegenüber dem Querbalken 5 und somit auch gegenüber der Sämaschine 10 nach oben ausweichen. Es ist erfindungsgemäß jedoch auch möglich, die Sämaschine fest mit der Walze zu verbinden, so daß sich die Walze zusammen mit der Sämaschine 10 gegenüber dem Querbalken 5 bzw. dem Vorgerät 6 in vertikaler Richtung bewegen können. Ein derartiges Ausführungsbeispiel ist in Fig. 5 dargestellt. Im übrigen ist an dieser Stelle darauf hinzuweisen, daß bei den unterschiedlichen Ausführungsbeispielen auf eine detaillierten Beschreibung der mit dem Ausführungsbeispiel gemäß Fig. 1 übereinstimmenden Elemente verzichtet wird.

In Fig. 5 ist eine Koppel 37 vorgesehen, welche von der Walzenachse 38 zu einem Lenker 39 reicht, so daß die Tragarme 24 somit Lenker eines Gelenkvierecks bilden. Ausweichbewegungen führen somit nicht zu einer Neigung der Anordnung, da der Lenker 39 ungefähr parallel zu dem Lenker bzw. Arm 24 angeordnet ist. Der Lenker 39 ist ebenso wie der Lenker 36 in der Mitte der Sämaschine vorgesehen, während sich die Lenker bzw. Arme 24 Jeweils an den Außenseiten befinden. Zu diesem Zwecke ist ein Querrohr 40 vorgesehen, welches sich über die gesamte Maschinenbreite erstreckt, so daß sich die Koppel 37 an den Walzenlagerungen, d. h. an den Enden der Walze 1 abstützen kann. Im mittleren Bereich der Koppel 37 kann ein schmaleres Oberteil 41 vorgesehen sein, welches beispielsweise dreieckig ausgebildet ist.

Bei der in Fig. 2 gezeigten Draufsicht des Ausführungsbeispiels gemäß Fig. 1 wird darauf verzichtet, die Sämaschine 10 abzubilden, um die übrige Konstruktion deutlich darstellen zu können. Es ist dabei, ähnlich wie bei den Ausführungsbeispielen der Fig. 3 und 4 ersichtlich, daß einzelne Räder 8 nebeneinander angeordnet sind, welche die Walze 1 bilden, wobei sich Ansätze 3 des Stützelements 2 in den Zwischenraum zwischen die Räder erstrecken können. Gemäß Fig. 4 sind die Räder versetzt angeordnet, um die Montage bzw. Demontage zu erleichtern.

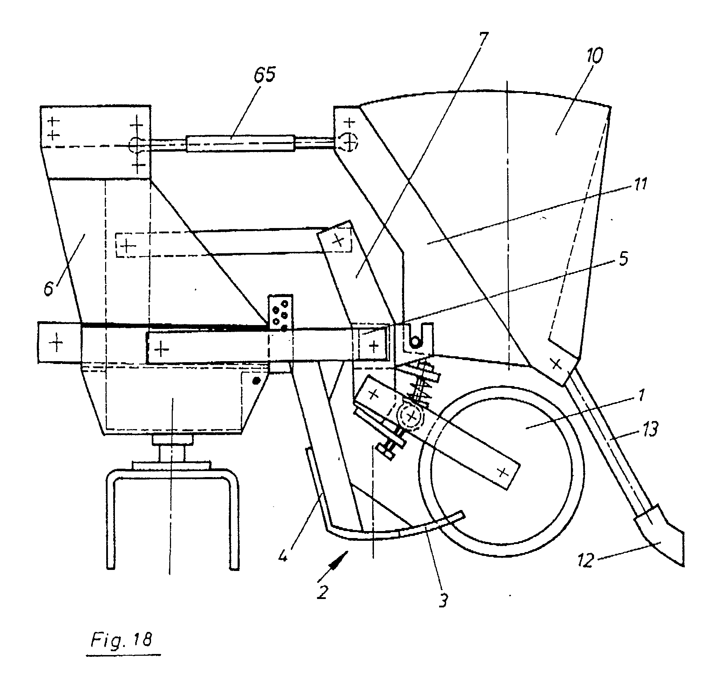

Die Fig. 6 zeigt ein weiteres Ausführungsbeispiel, ähnlich Fig. 1, bei welchem das Stützelement 2 an seiner Vorderseite 20 gelenkig und abgefedert angeordnet ist. Gemäß Fig. 6 sind die einzelnen Räder der Walze 1, wie in Fig. 4 gezeigt, zueinander versetzt. Auf die Planierplatte 4 wurde bei diesem Ausführungsbeispiel verzichtet bzw. ist sie durch die Vorderseite 20 ersetzt. Weiterhin ist anzumerken, daß der obere Abschnitt des Stützelements 2 gegen die Vorderseiten der Seitenplatten 22 angelegt und abgestützt ist.

Erfindungsgemäß kann die Eindringtiefe der Räder 8 am besten fixiert werden, wenn die Räder 8 und das Stützelement 2 ge meinsam an der Koppel bzw. dem Querbalken 5 angebracht und somit nahezu unabhängig von etwaigen Bewegungen des über ein Gelenkviereck gekoppelten Vorgeräts sind. Es ist jedoch auch möglich, daß Stützelement direkt am Vorgerät anzubringen, wenn dieses durch die Walze 1 genau auf Tiefe geführt ist. Die Walze kann dann mittels einer Tiefeneinstellung entweder fest mit dem Vorgerät 6 verbunden sein. Es ist jedoch auch möglich, an dem Vorgerät Anschläge anzubringen, so daß dies nach oben ausweichen kann, wenn es auf Bodenhindernisse auftrifft.

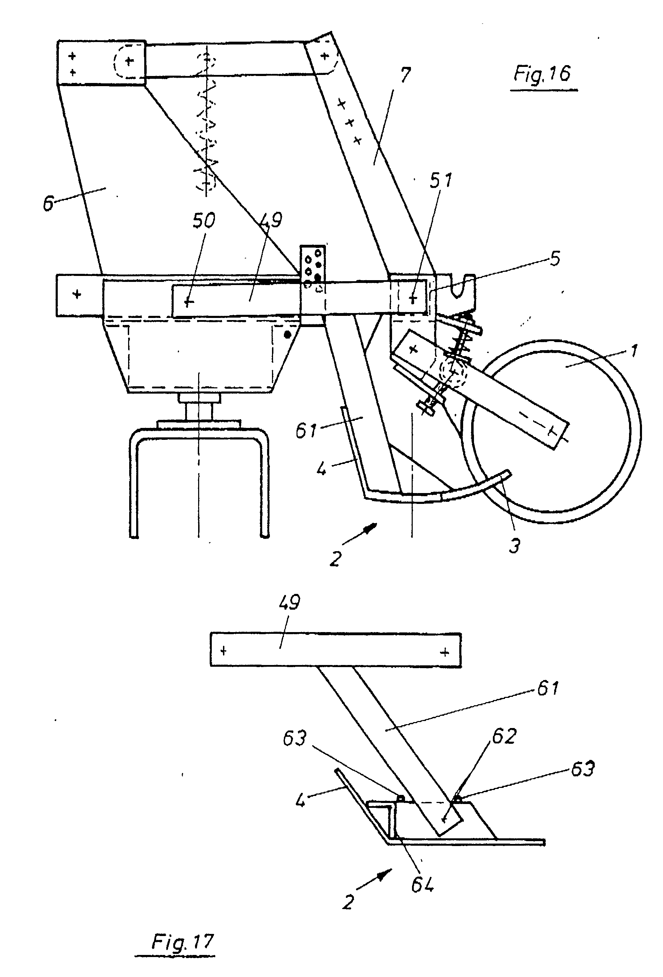

Gemäß dem in Fig. 7 gezeigten Ausführungsbeispiel ist das Stützelement 2 einstückig mit einer Planierplatte 4 versehen, welche an einem Lager 43 mittels Armen 42 gelagert ist. Der Arm 42 liegt dabei gegen einen Bolzen 44 an, der zur Änderung der Höhenlage des Vorgeräts 6 umgesteckt werden kann. Weiterhin liegen die unteren Lenker 19 gegen Bolzen 45 an, um eine Änderung der Arbeitstiefe an zwei unterschiedlichen Stellen einstellen zu können. Durch ein Änderung der Stellung des Bolzens 45 ist es möglich, die Lage der Räder 8 relativ zu dem Stützelement 2 zu verändern, wodurch sich auch die Tiefe der Bodenrille ändert. Wenn die Vorderseite des Stützelements 2 gegen ein Hindernis trifft, kann der Arm 42 vom Anschlag 44 abheben. Die Arme 42 sind über Federn 46 gegenüber einer Konsole 47 abgefedert, welche mit der Seite des Gehäuses des Vorgeräts 6 verbunden ist.

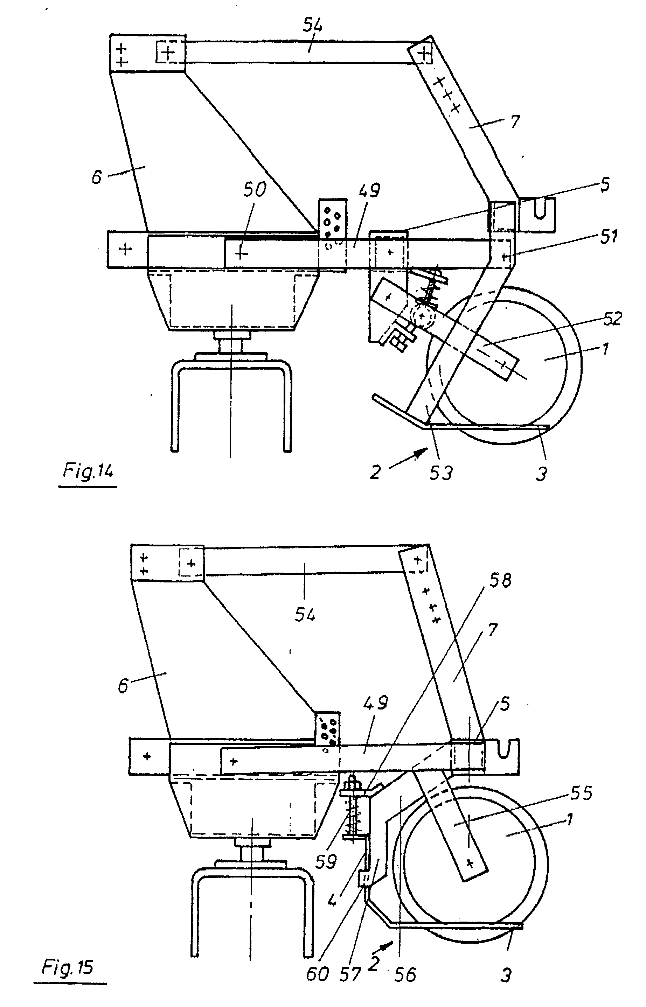

Das in Fig. 8 gezeigte Ausführungsbeispiel sieht vor, daß, ähnlich wie in Fig. 7, die Arme 42 an den anderen Seiten den Anschläge 44 anliegen. Die Anordnung ist hier so getroffen, daß die Federn 46 das Anheben des Vorgeräts 6 unterstützen, wenn dessen Werkzeuge auf Bodenhindernisse auftreffen. Bei einer Vertikalbewegung des Vorgeräts 6 können die Arme 42 von den Anschlägen 44 abheben, wobei die Federn 46 eine anhebende Kraft ausüben. Damit jedoch die Arme 42 bei einem Anheben der Gesamtmaschine mit dem Dreipunktkraftheber eines Schlepper nicht zu weit nach unten ausweichen, sind Anschläge 48 an den Seitenplatten 22 vorgesehen.

Bei den Ausführungsbeispielen gemäß den Fig. 7 und 8 ist es möglich, die Eindringtiefe der Walze 1 bzw. die Tiefe der Bodenrinnen und somit die Anpassung der Walze gegenüber dem Stützelement 2 mittels zweier Teifeneinstellmöglichkeiten mit Hilfe der Bolzen 45 und 44 vorzunehmen.

In Fig. 9 ist ein weiteres Ausführungsbeispiel dargestellt, bei welchem die Arme 42 zwar am Drehpunkt 43 am Vorgerät 6 schwenkbar gelagert sind, das Stützelement 2 jedoch von den Endplatten 22 abgestützt wird. Die Platten 22 sind zu diesem Zweck mit einer Reihe von Bohrungen versehen, um eine Einstellung der Bolzen 44 und 45 zu ermöglichen.

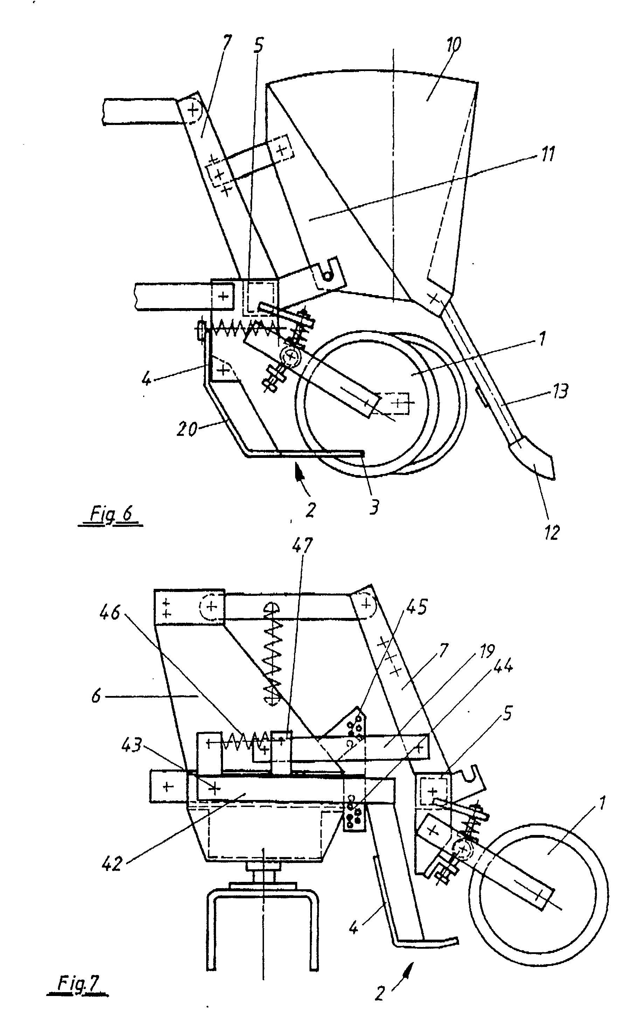

In den Fig. 14 und 15 sind weitere Ausführungsbeispiele des erfindungsgemäßen Bodenbearbeitungsgeräts dargestellt, welche sich hinsichtlich der Anordnung der Tragarme der Walze 1 unterscheiden. Dabei ist die Walze mittels Tragarmen am Vorgerät 6 schwenkbar angeordnet, während das Stützelement 2 an einer hinteren Koppel angeordnet ist, wobei die Teile derartig zueinander angeordnet sind, daß bei einer Höhenverstellung oder eine Höhenbewegung der Vorgeräts 6 die Eindringtiefe der Räder 8 der Walze 1 gegenüber dem Stützelement 2 konstant bleibt. In Fig. 14 sind untere Tragarme 49 gleichzeitig untere Lenker des Koppelgestänges. Die Tragarme 49 sind durch den Querbalken 5 starr miteinander verbunden. Die Walze 1 ist an dem Querbalken 5 angeordnet, ähnlich wie bei dem Ausführungsbeispiel gemäß Fig. 7. Die Walze ist gegenüber dem Querbalken 5 höheneinstellbar, so daß sich eine Höheneinstellbarkeit des Stützelements 2 erübrigt. Dieses ist fest mit der Koppel bzw. dem Anschlußbock 7 verbunden. Die unteren Tragarme 49 sind an den Stellen 50 und 51 gelagert, so daß bei einer Verstellung des Vorgerätes 6 die unteren Tragarme 49 und mit ihr die Walze 1 eine Schwenkung um den Lagerpunkt 50 vollführen. Dabei bewegt sich die Koppel 7 parallel zum Vorgerät 6, wobei die Achse der Walze 1 eine kleine Schwenkbewegung um den Lagerpunkt 51 ausführt. Es ändert sich somit der Abstand zwischen der Achse der Walze 1 und dem Lagerpunkt 51 nicht.

Der Querbalken 5 erstreckt sich bei diesem Ausführungsbeispiel über die gesamte Breite des Bodenbearbeitungsgeräts, wobei die Tragarme 49 außen an dem Vorgerät 6 sowie an den Querbalken 5 angeordnet sind und bis zu dem Gelenkpunkt 51 verlängert sind. Die äußeren Arme 52, an welchen die Walze 1 gelagert ist, befinden sich ungefähr unter den Lenkern 49. Weiterhin sind Arme 53 vorgesehen, welche sich außerhalb der Arme 49 und 52 befinden. An den Armen 53 ist das Stützelement 2 gelagert. Zusätzlich ist weiterhin ein Oberlenker 54 vorgesehen, welcher sich ungefähr in der Mitte des Bodenbearbeitungsgeräts befindet.

Das Ausführungsbeispiele gemäß Fig. 15 umfaßt Tragarme 55, an welchen die Walze 1 gelagert ist und welche fest mit den unteren Tragarmen 49 verbunden sind. Die Koppel bzw. der Anschlußbock 7 weist den Querbalken 5 auf, an welchem weiterhin Arme 56 befestigt sind, welche das Stützelement 2 tragen. Da bei diesem Ausführungsbeispiel die Walze über die Tragarme 55 fest mit den Tragarmen 49 verbunden ist, erfolgt die Höhenverstellbarkeit zwischen der Walze 1 und dem Stützelement 2 im Bereich zwischen dem Stützelement 2 und dem Anschlußbock 7. An den Armen 56 ist ein vertikaler Endbereich 57 vorgesehen, welcher das Stützelement 2 führt. Dadurch kann sich das Stützelement 2 nach vorne abstützen. Zusätzlich sind an den Armen 56 Konsolen 58 angebracht, durch welche Zapfen 59 greifen, welche fest mit dem vertikalen Bereich 57 verbunden sind. Mittels Druckfedern erfolgt somit eine Abstützung des Stützelements, wobei dieses nach oben ausweichen kann. Mittels Muttern der Zapfen 59 ist eine Höheneinstellbarkeit des Stützelements 2 gegenüber den Konsolen 58 bzw. dem Anschlußbock 7 möglich. Weiterhin ist eine Führung 60 zur Führung des Stützelements 2 an den Armen 56 angebracht.

In Abwandlung der in Fig. 14 und 15 gezeigten Ausführungsbeispielen ist es jedoch auch möglich, die Walze nicht mit den Unterlenkern des Koppelgestänges bzw. des Anschlußbocks 7 zu verbinden, sondern das Stützelement 2 fest mit den Unterlenkern zu verbinden. Der Vorteil ergibt sich dadurch, daß der Unterlenker vor dem Anschlußbock 7 angeordnet sind, und das Stützelement sich somit vor der Walze 1 befindet. Dabei wird der Abstützpunkt des Stützelements 2 auf dem Erdboden senkrecht unter dem Anlenkpunkt der Unterlenker an dem Anschlußbock 7 plaziert, so daß sich bei einer Tiefenverstellung nur horizontale Bewegungen des Stützelements 2 ergeben. Dargestellt ist das in der Fig. 16.

Das Ausführungsbeispiel gemäß Fig. 16 umfaßt eine Lagerung und Abstützung der Walze 1 an dem Querbalken 5. Das Stützelement 2 ist über Stützen 61 fest mit den Lenkern oder unteren Tragarmen 49 verbunden. Hierbei ist es weiterhin möglich, daß Stützelement 2 gegenüber den Tragarmen 49 einstellbar zu machen, um beispielsweise einen Verschleiß der Werkzeuge des Vorgeräts 6 ausgleichen zu können. Zusätzlich wäre es möglich, daß Stützelement 2 ähnlich wie in Fig. 6 abzufedern.

Bei dem in Fig. 16 gezeigten Ausführungsbeispiel ist die Bodenfläche des Stützelement gewölbt, da bei einer Verstellung eine Verschwenkung um den Lagerpunkt 51 erfolgt. Es wird somit eine exakte Tiefe der durch das Stützelement 2 bzw. die Walze 1 erzeugten Bodenrinne eingehalten.

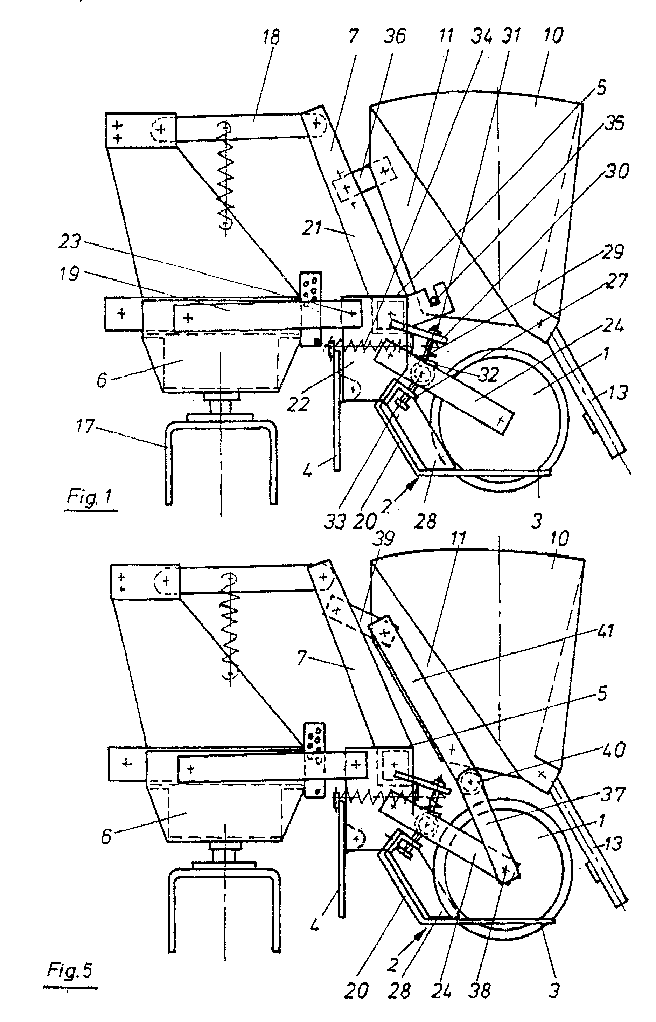

In Fig. 17 ist eine Detailansicht dargestellt, bei welcher das plattenförmige Stützelement 2 gelenkig an der Stütze 61 angeordnet ist. Die Schwenkbarkeit um den Drehpunkt 62 wird durch Anschläge 63 begrenzt. Weiterhin ist zur Verstärkung des Stützelements 2 eine Winkelschiene 64 vorgesehen.

Das Ausführungsbeispiel gemäß Fig. 18 zeigt eine Variante des in Fig. 16 beschriebenen Ausführungsbeispiels. Die Sämaschine 10 kann dabei mit einem eigenen Oberlenker 65 an das Vorgerät 6 angeschlossen werden. Der Oberlenker 64 ist dabei parallel zu den Lenkern des hinteren Koppelgestänges angeordnet. Dadurch wird ermöglicht, daß mehr Platz für die Sämaschine 10 zur Verfügung steht.

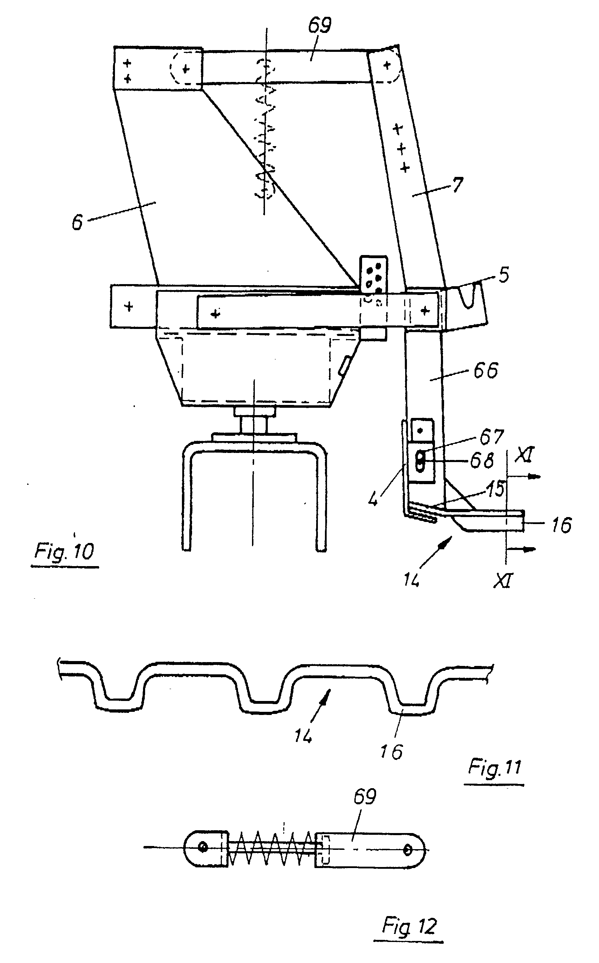

In den Fig. 10 und 11 ist ein weiteres Ausführungsbeispiel des erfindungsgemäßen Bodenbearbeitungsgeräts dargestellt, bei welchem ein Kufenelement 14 zur Anwendung kommt, welches im wesentlichen plattenförmig ausgebildet ist und an seiner Unterseite mit Profilierungen 16 versehen ist, welche entsprechende Bodenrillen ausstützen. Hierzu sind an dem Querbalken 5 vertikale Stützen 66 vorgesehen, welche sich in etwa bis zum Niveau der Erdoberfläche erstrecken. Zusätzlich ist eine Höhenverstellbarkeit des Kufenelements 14 vorgesehen. Der vordere Endbereich 15 des Kufenelement 14 ist zum Anpressen und Planieren der Erde leicht nach oben gebogen.

Um eine Einstellung der Tiefe der durch die Profilierungen 16 aufgebrachten Bodenrillen vorzusehen, ist an der Vorderseite der Stützen 66 eine Platte vorgesehen, welche auch als Planierplatte 4 ausgebildet sein kann. Der untere Bereich der Planierplatte 4 ist angewinkelt und erstreckt sich in etwa parallel zu dem vorderen Bereich des Kufenelements 14. Die Planierplatte 4 ist über ein Langloch 67 und einen an der Stütze 66 befestigten Bolzen 68 höheneinstellbar. Durch entsprechende Klemmung kann eine Höheneinstellbarkeit vorgenommen werden. Bei leichteren Böden ist es möglich, auf eine Abfederung des Kufenelements 14 zu verzichten, der Fachmann erkennt jedoch, daß eine Abfederung ähnlich wie bei den bisher beschriebenen Ausführungsbeispielen möglich ist.

In Fig. 12 ist ein vorgespannter abgefedertere Oberlenker 69 dargestellt, welcher beispielsweise als Oberlenker bei dem Ausführungsbeispiel gemäß Fig. 10 verwendbar ist. Es ist somit möglich, mittels eines einzigen abgefederten Oberlenkers 69 das Kufenelement 14 insgesamt abgefedert zu lagern. Weiterhin ist der in Fig. 12 gezeigte Oberlenker auch bei den Ausführungsbeispielen 7 und 9 einsetzbar, wobei er die dort gezeigte Abfederung der Walze 1 oder des Stützelements 2 ersetzen kann.

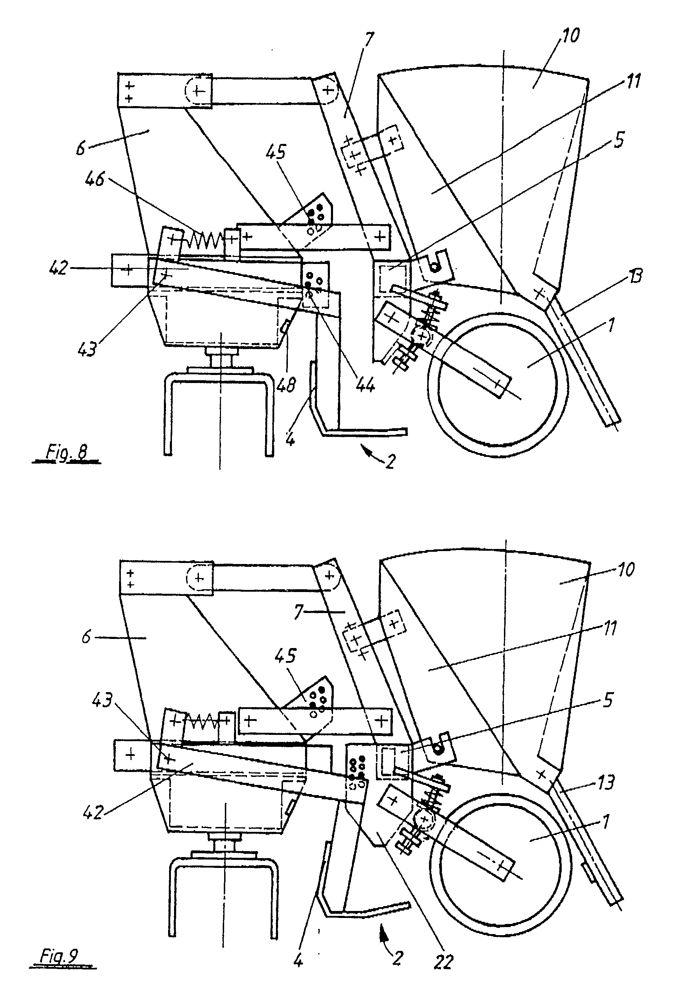

Die Fig. 13 zeigt ein weiteres Ausführungsbeispiel des Stützelements bzw. der Ansätze 3, welche mit länglichen Ausnehmungen 17 versehen sind, durch welche die Räder 8 durchgreifen können. Somit dienen die Ansätze 3 als Abstreifer, welche das Profil des Rades auch an dessen Rückseite umgreifen. Um zu verhindern, daß mitgenommene Bewuchsreste oder Erdbrocken oberhalb der Ansätze 3 angesammelt werden, ist die in Fig. 13 gezeigte Ausnehmung 70 geringfügig größer, als die jeweilige projizierte Fläche des Rades.

Erfindungsgemäß ist es somit möglich, bei den einzeln aufgehängten Rädern 8 der Walze 1 in einfacher Weise Reparaturen durchzuführen. Die Räder 8 können in Form von Schlappreifen ausgebildet sein, welche bei einer Beschädigung auf besonders einfache Weise gewechselt werden können.

Weiterhin ist es erfindungsgemäß möglich, mittels der Walze beispielsweise ein Dosiergerät der Sämaschine anzutreiben.

Die Walze ist bevorzugterweise so ausgestaltet, daß das walkende, elastisch verformbare Profil der Räder 8 eine Verschmutzung der Walze 1 verhindert.

In einer Weiterentwicklung der Walze ist es weiterhin möglich, mittels einer zentralen Druckverstellungseinrichtung die abgefederte Walze 1 bzw. die einzeln aufgehängten Räder 8 zu verstellen, etwa dadurch, daß die Konsolen 30 der Federabstützung gemeinsam gegenüber dem Querbalken 5 verschwenkbar ausgebildet sind. Hinter dem Querbalken 5 kann somit eine schwenkbare Welle vorgesehen sein, an welcher die Konsolen 30 angebracht sind.

Weiterhin ist es erfindungsgemäße möglich, einzelne Räder 8 der Walze 1 mit dem zugehörigen Abschnitt des Stützelements 2 jeweils als ein Aggregat auszuführen, so daß die Reihenabstände verändert werden können. Derartige Aggregate können als Aggregate für eine Einzelkornsaat ausgebildet sein, welche auf einen größeren Abstand gesetzt werden können als für eine Getreidesaat.

Die Erfindung ist nicht auf die gezeigten Ausführungsbeispiele beschränkt, vielmehr ergeben sich im Rahmen der Erfindung für den Fachmann vielfältige Abwandlungs- und Modifikationsmöglichkeiten.

**Ansprüche**

1. Bodenbearbeitungsgerät mit einer Walze (1), welche am Umfang mehrere vorstehende, voneinander beabstandete Ringelemente (8) aufweist, dadurch gekennzeichnet, das in Bewegungsrichtung vor der Walze (1) ein sich im wesentlichen über die gesamte Breite der Walze (1) erstreckendes, die Eindringtiefe der Ringelemente (8) der Walze (1) begrenzendes Planier- bzw. Stützelement (4;2) angeordnet ist.

2. Bodenbearbeitungsgerät nach Anspruch 1, dadurch gekennzeichnet, das die Walze (1) gegenüber dem Planier- bzw. Stützelement (4;2) höhenveränderbar ist.

3. Bodenbearbeitungsgerät nach Anspruch 1 oder 2, dadurch gekennzeichnet, das das Planier- bzw. Stützelement (4;2) plattenförmig ausgebildet ist.

4. Bodenbearbeitungsgerät nach einem der Ansprüche 1 bis 3, dadurch gekennzeichnet, das die Walze (1) gegenüber dem Planier- bzw. Stützelement (4;2) abgefedert gelagert ist.

5. Bodenbearbeitungsgerät nach einem der Ansprüche 1 bis 5, dadurch gekennzeichnet, das vor dem Stützelement (2) eine vorzugsweise federnde Planierplatte (4) angeordnet ist.

6. Bodenbearbeitungsgerät nach einem der Ansprüche 5, dadurch gekennzeichnet, daß die Planierplatte (4) und /oder das Stützelement (4;2) von einstellbaren Normallagen aus höhenbeweglich an einem Vorgerät (6) gelagert ist.

7. Bodenbearbeitungsgerät nach einem der Ansprüche 1 bis 6, dadurch gekennzeichnet, das das Planier- bzw. Stütz-element (2) an einem Querbalken (5) gelagert ist, welcher gegenüber einem vor dem Bodenbearbeitungsgerät angeordneten vorgerät (6) über eine parallelogrammartige Anlenkung höhenverstellbar ist.

8. Bodenbearbeitungsgerät nach Anspruch 7, dadurch gekennzeichnet, daß die Walze (1) über Schwenkarme (24) am Querbalken (5) gelagert ist.

9. Bodenbearbeitungsgerät nach einem der Ansprüche 5 bis 8, dadurch gekennzeichnet, das die Walze (1) und/oder das Stützelement (4;2) und/oder die Planierplatte (4) in Form mehrerer Einzelsegmente ausgebildet sind, welche jeweils einzeln gelagert sind.

10. Bodenbearbeitungsgerät nach einem der Ansprüche 1 bis 9, dadurch gekennzeichnet, das die Walze (1) einzelne Räder (8) oder Scheiben umfaßt.

11. Bodenbearbeitungsgerät nach einem der Ansprüche 1 bis 10, dadurch gekennzeichnet, das dem Bearbeitungsgerät eine Sämaschine (10) nachgeordnet ist.

12. Bodenbearbeitungsgerät nach Anspruch 11, dadurch gekennzeichnet, daß die Säschare (12) in die durch das Bodenbearbeitungsgerät erzeugten Bo-

denrillen oder Dämme münden.

Fig. 3

Fig. 4

Fig. 13

*Fig. 2*

Fig. 18

Fig.16

Fig.17

14

Fig.14

Fig.15

*Fig. 10*

*Fig. 11*

*Fig. 12*

Fig. 8

Fig. 9

17

Fig 6

Fig 7

Fig. 1

Fig. 5

Europäisches
Patentamt

# EUROPÄISCHER RECHERCHENBERICHT

Nummer der Anmeldung

EP   90 12 1076

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y,D | DE-A-2528930 (AMAZONEN-WERKE H. DREYER) <br> * Seite 11, Absatz 5 - Seite 14, Absatz 1; Figuren 1-3, 5 * | 1, 3, 7-12 | A01B29/04 <br> A01B29/06 <br> A01B49/04 |
| A,D | | 2, 4 | |
| | --- | | |
| Y | EP-A-0305600 (C. VAN DER LELY N.V.) <br> * das ganze Dokument * | 1, 3, 7-12 | |
| A | | 6 | |
| | --- | | |
| A | DE-A-1941002 (C. VAN DER LELY N.V.) <br> * Figuren 1, 5 * | 1, 2, 8 | |
| | --- | | |
| A | EP-A-0166493 (C. VAN DER LELY N.V.) <br> * Zusammenfassung; Figur 2 * | 1, 2, 8 | |
| | --- | | |
| A,D | DE-B-1052141 (ROTARY HOES LTD.) <br> * Figuren * | 1, 3, 6 | |
| | --- | | |
| A,D | EP-A-0191871 (F. KIRCHBERGER) <br> * Seite 3, Zeile 9 - Seite 5, Zeile 5; Figur * | 1, 10-12 | |
| | ----- | | **RECHERCHIERTE SACHGEBIETE (Int. Cl.5 )** |
| | | | A01B |

Der vorliegende Recherchenbericht wurde für alle Patentansprüche erstellt

| Recherchenort | Abschlußdatum der Recherche | Prüfer |
|---|---|---|
| BERLIN | 05 FEBRUAR 1991 | MERCKX A. |